# EUROPÄISCHE PATENTSCHRIFT

(11) **EP 3 010 846 B1**
(45) Veröffentlichungstag und Bekanntmachung des Hinweises auf die Patenterteilung: **26.12.2018**
(21) Anmeldenummer: 14731943.8
(22) Anmeldetag: 17.06.2014
(51) Int. Cl.: B66C 13/54, B66B 9/02, B66B 5/00, B66B 11/00, B66B 11/02, B66B 13/06, B66B 11/04

(54) **ANTRIEBSSYSTEM ZUR VERTIKALEN FORTBEWEGUNG EINER KABINE ODER DERGLEICHEN, SOWIE EIN VERFAHREN ZUM BETRIEB EINES DERARTIGEN ANTRIEBSSYSTEMS, SOWIE TURMDREHKRAN MIT ANTRIEBSSYSTEM**
DRIVE SYSTEM FOR VERTICALLY MOVING A CAR OR SIMILAR, AND METHOD FOR OPERATING SAID TYPE OF DRIVE SYSTEM AND ROTARY TOWER CRANE COMPRISING A DRIVE SYSTEM
SYSTÈME D'ENTRAÎNEMENT POUR DÉPLACER VERTICALEMENT UNE CABINE OU SIMILAIRE, AINSI QUE PROCÉDÉ DE FONCTIONNEMENT D'UN TEL SYSTÈME D'ENTRAÎNEMENT, ET GRUE À TOUR ÉQUIPÉE D'UN SYSTÈME D'ENTRAÎNEMENT

(30) Priorität: 17.06.2013 DE 102013010058; 17.06.2013 DE 102013010056; 17.06.2013 DE 102013010053
(43) Veröffentlichungstag der Anmeldung: 27.04.2016
(73) Patentinhaber: Böcker Ag, 59368 Werne (DE)
(72) Erfinder: KOLKMANN, Frank, 59174 Kamen (DE)
(74) Vertreter: Meinke, Jochen
(86) Internationale Anmeldenummer: PCT/EP2014/062735
(87) Internationale Veröffentlichungsnummer: WO 2014/202614

(56) Entgegenhaltungen:
- WO-A1-92/18412
- GB-A- 2 130 682
- US-A- 920 630

## Beschreibung

Die Erfindung betrifft ein Antriebssystem in Form eines Antriebsmoduls zur vertikalen Fortbewegung einer angetriebenen Kabine, beispielsweise für Turmdrehkräne, Baugerüste, Windkraftanlagen, Türme oder dergleichen über mehrere fluchtend angeordnete Trag- und Führungsstrukturen, die mit einer Verzahnung versehen sind, sowie entsprechend ausgerüstete Turmdrehkräne, Baugerüste, Windkraftanlagen, Türme und dergleichen. Ebenfalls wird ein Verfahren zur Ausführung dieser Vorrichtung beschrieben. Ein Antriebssystem gemäß dem Stand der Technik ist in GB2130682 offenbart.

Mit der GB 382,107 ist ein Antriebssystem für einen Aufzug bekannt geworden, bei dem die Kabine über seitlich angeordnete durchlaufende Zahnstangen mittels Antriebsritzel, die durch einen Antriebsmotor angetrieben werden, vertikal verfahren wird.

Die Verwendung von nur einer Zahnstange zur Bewegung von Kabinen mittels eines elektromotorischen Antriebes zeigen die US 3 415 343 und die WO 92/18412 A1. Die Elektromotoren befinden sich zum einen auf der Rückseite bzw. auf dem Dach der Kabine.

Die Aufgabe der Erfindung besteht darin, ein Antriebssystem zu schaffen, welches zur vertikalen Fortbewegung von Kabinen oder dergleichen einen reibungslosen Betrieb bei aus mehreren hintereinander fluchtend angeordneten, einzelnen Führungselementen ermöglicht. Derartige einzelne Führungselemente können beispielsweise bei Turmdrehkränen, Baugerüsten, Windkraftanlagen, Türmen oder dergleichen eine Verwendung finden, weil hier entsprechende einzelne Segmente zur Vervollständigung aufeinander gesteckt und verbunden werden.

Gelöst wird die Aufgabe durch die Merkmale des Anspruches 1. Die jeweiligen Unteransprüche geben dabei eine weitere Ausgestaltung des erfindungsgemäßen Gedankens wieder.

Da auf Baustellen, auf denen entsprechende Turmdrehkräne zur Schaffung von Gebäuden oder dergleichen eingesetzt werden, ein rauer Betrieb herrscht, werden insbesondere Teilsegmente gleicher Länge, beispielsweise von einem Turmdrehkran bzw. von Gerüsten, Windkraftanlagen und dergleichen in Fixlängen bereitgestellt und auf der Baustelle entsprechend aufeinander aufgebaut. Da derartige Kräne bzw. Gerüste eine immer höhere Ausdehnung annehmen, ist es sinnvoll zur Beförderung des Kranführers bzw. der Bauarbeiter oder von Wartungspersonal diese nicht die Höhen erklimmen zu lassen, sondern dieses zu automatisieren. Dabei wird vorgeschlagen, ein Antriebssystem in Form eines Antriebsmoduls zur vertikalen Fortbewegung für eine durch einen Antriebsmotor angetriebene Kabine oder dergleichen entlang mehrerer hintereinander fluchtend angeordneter Trag- und Führungsstrukturen einzusetzen. Diese Trag- und Führungsstrukturen sind dabei mit einer Verzahnung versehen, um so in Verbindung mit einem Antriebsmodul eine sichere Fortbewegung einer Kabine oder dergleichen zu realisieren. Eine Verzahnung ist deshalb angebracht, weil hier eine Zwangsführung durchgeführt wird und entsprechende Reibradantriebe nicht die geforderte hohe Sicherheit geben können. Deshalb beinhaltet das Antriebsmodul eine Antriebswelle, die an ihren Enden Antriebsritzel aufweist. Diese Antriebsritzel arbeiten mit zwei jeweils neben dem Antriebsritzel an gegenüberliegenden Seiten angeordneten Übertragungsritzeln zusammen, wobei die Verzahnung der Übertragungsritzel in die Verzahnung der Tragstruktur eingreift. So ist eine Fortbewegung einer Kabine oder dergleichen ohne Probleme auch in vertikaler Richtung möglich.

Ein derartiges Antriebsmodul kann sowohl unterhalb als auch oberhalb einer Kabine oder dergleichen angeordnet sein. Zur Erhöhung der Sicherheit ist es in einer bevorzugten Ausführungsform möglich, dass die Antriebswelle auf beiden Seiten Antriebsritzel aufweist und so nicht nur in eine einseitige Tragstrukturverzahnung eingreift. Der Antriebsmotor ist dabei mit einem Getriebe ausgestattet. An den Enden ist die Antriebswelle vorzugsweise endseitig jeweils in einer Lagerplatte gelagert. Ebenfalls in der Lagerplatte sind in einer fluchtenden Richtung die Übertragungsritzel über Lager befestigt.

In einer bevorzugten Ausführungsform sind die Übertragungsritzel und das Antriebsritzel breiter ausgeführt als die Verzahnung der Tragstruktur. Dadurch können Toleranzen in seitlicher Richtung ohne Probleme aufgefangen werden. Bei einem Turmdrehkran, dessen einzelne Turmsegmente eine fixe Länge aufweisen und im Wesentlichen eine quadratische Grundfläche aufweisen, sind die Trag- und Führungsstrukturen entweder innerhalb dieses Turmsegmentes oder außerhalb angebracht. Um jedoch Beschädigungen an den Enden der Trag- und Führungsstruktur zu unterbinden, ist die Längenerstreckung geringer als das Turmsegment als solches. Dadurch entstehen bei aneinander gesetzten Turmsegmenten zwischen den fluchtend angeordneten Trag- und Führungsstrukturen Lücken. Diese Lücken haben jedoch den Vorteil, dass auch hier eine Beschädigung unterbunden wird bzw. dass Toleranzen nicht zu einer Funktionsunfähigkeit des Antriebssystems führen können.

Damit das Antriebssystem diese Lücke beim Vorwärtsbewegen auch ohne Probleme überwinden kann, sind jeweils an den zueinander gerichteten Stirnseiten der Trag- und Führungsstrukturen die Verzahnungen herunter genommen bzw. reduziert worden. Dieses wird dadurch erreicht, dass entsprechende Anlaufschrägen vorhanden sind, die so gestaltet sind, dass die Zahnhöhe stetig abnimmt, bis keine Zahnhöhe mehr vorhanden ist. Diese Anlaufschräge geht dabei über einen Radius in die Stirnseite der Trag- und Führungsstruktur über.

Damit das Antriebsmodul neben der Lücke der hintereinander angeordneten Trag- und Führungsstrukturen auch diesen größeren Bereich ohne Verzahnung überbrücken kann, ist die Anordnung der beiden Übertragungsräder und deren Größe so ausgewählt, dass aufgrund des dazwischen liegenden Antriebsrades beim Auftauchen einer Lücke ohne Verzahnung stets eines der beiden Übertragungsräder voll im Eingriff mit der Verzahnung einer Tragstruktur steht. Dieses wird insbesondere dadurch erreicht, dass die in vertikaler Richtung ebenfalls fluchtend angeordneten äußeren Übertragungsräder zu dem dazwischen liegenden Antriebsritzel angeordnet sind.

Um weitere Toleranzen bzw. aufgrund der Belastung der aufwärts oder abwärts fahrenden Kabine einen Ausgleich zu schaffen, ist die Trag- und Führungsstruktur über Befestigungen an den einzelnen Turmsegmenten vorzugsweise an einer quer ausgerichteten Turmstrebe oder dergleichen nachgiebig oder federnd angeordnet worden. Dabei kann eine derartige Befestigung aus einem Federstahl hergestellt werden.

In einer bevorzugten Ausführungsform hat es sich ergeben, dass Enden der Federschenkel kraft- und formschlüssig mit der Turmstrebe verbunden werden. Bei der Befestigung ist ebenfalls eine bevorzugte Ausführungsform in Form einer U-förmigen Federanordnung als sinnvoll anzusehen. Dabei ist der Grund der U-förmigen Gestaltung endseitig mit der Trag- und Führungsstruktur kraft- und formschlüssig verbunden. Die Ausführung der Trag- und Führungsstruktur wird vorzugsweise in einer U-förmigen Form für den Führungsbereich einerseits und einem von diesem um 90° abgewinkelten Tragschenkel, an dessen Ende die Verzahnung für die Tragstruktur vorhanden ist, vorgenommen. Somit ist es möglich, dass an der Trag- und Führungsstruktur in mehreren Freiheitsgraden entsprechende Führungsrollen angreifen können, um so eine saubere und sichere Führung des Antriebsmoduls und auch der Kabine zu erreichen. Dafür befindet sich vorzugsweise im oberen Teil der Kabine eine weitere Führungseinheit mit Rollen.

Eine geeignete Trag- und Führungsstruktur besteht im Wesentlichen aus einem Basisschenkel, der über eine Befestigungsvorrichtung an dem Turmsegment befestigt wird. Die Befestigung wird nur an zwei Punkten, nämlich den äußeren Punkten der Trag- und Führungsstruktur, ausgeführt. Von dem Basisschenkel geht in einem Winkel von ca. 90° davon ein Distanzschenkel aus und daran ist ebenfalls wieder in einem Winkel von 90° ein Laufschenkel ausgebildet. Aus diesen drei Schenkeln wird quasi das "U" gebildet. An dem Laufschenkel ist darüber hinaus der Tragschenkel abgewinkelt ausgebildet. Um den Tragschenkel in die Lage zu versetzen, die bezeichnete Kabine durch ein geeignetes Antriebsmodul befördern zu können, weist dieser Tragschenkel an seinem auskragenden Ende eine Verzahnung auf. Eine solche Verzahnung kann vorzugsweise als Evolventenverzahnung oder Trapezverzahnung oder dergleichen ausgebildet sein.

Aufgrund der geringeren Erstreckung der Trag- und Führungsstruktur gegenüber den Turmsegmenten wird zwangsläufig zwischen zwei benachbarten Trag- und Führungsstrukturen, die fluchtend gegeneinander ausgerichtet sind, eine Lücke entstehen. Diese Lücke muss sicher durch das Antriebsmodul überfahren werden. Auf die geeignete Ausführung einer derartigen Antriebskonzeption wird nachfolgend noch eingegangen.

In einer bevorzugten Ausführungsform ist es möglich, dass die Verzahnung an dem Tragschenkel jeweils zu ihren Enden eine abnehmende Verzahnung in Form einer Anlaufschräge aufweist. Diese Anlaufschräge läuft zu den Stirnseiten des Tragschenkels über einen Radius vorzugsweise aus. Auf Grund dieser Gestaltung fehlt an den Enden des Tragschenkels die Verzahnung. Durch die erfindungsgemäße Ausbildung des Antriebsmoduls ist es jedoch möglich, das Überfahren dieser Stoßbereiche zwischen zwei Fluchten der angeordneten Trag- und Führungsstrukturen sicher in Vertikalrichtung durchzuführen.

In einer weiteren bevorzugten Ausführungsform ist es auch möglich, dass auf das Auslaufen der Verzahnung zu den Stirnseiten der Trag- und Führungsstrukturen verzichtet werden kann. Bei einer solchen Ausführung ist es jedoch wichtig, dass das Maß der Lücken einem vorbestimmten Abstandsmaß entspricht.

Das Antriebsmodul kann sowohl unterhalb als auch oberhalb der Kabine angeordnet sein. Als sehr zweckmäßig hat es sich erwiesen, dass das Antriebsmodul unterhalb der Kabine angeordnet ist. Durch eine derartige Konstruktion besteht die Möglichkeit, dass das Antriebsmodul auch für andere Kabinen oder dergleichen eingesetzt werden kann. Der Boden der Kabine wird dabei auf einem Rahmen oder einem Teil eines Rahmens, der das tragende Element des Antriebsmoduls bildet, getragen. Durch die Verwendung einer Rahmenkonstruktion wird neben einer großen Festigkeit gleichzeitig am Gewicht für ein derartiges Antriebsmodul eingespart. Des Weiteren kann bei einer derartigen Ausführung auch eine Reparatur im Bedarfsfalle einfach durchgeführt werden.

Innerhalb des Rahmens ist ein Antriebsmotor mit einem Getriebe untergebracht, wobei das Getriebe eine Ausgangswelle aufweist, die zu beiden Seiten des Rahmens ausgerichtet ist. An den Enden der Antriebswelle sind jeweils Antriebsräder oder Antriebsritzel vorhanden, die mit darüber und darunter angeordneten drehgelagerten Übertragungsrädern kämmen. Bei dieser Konstruktionsart greift das Antriebsritzel nur in die Übertragungsritzel ein und nicht in die Verzahnung der Trag- und Führungsstruktur. Gleichzeitig kann durch diese geschickte Anordnung von drei übereinander quasi in einer Linie angeordneter Zahnräder problemlos ein Überfahren der benachbarten Trag- und Führungsstrukturen in dem Lückenbereich ausgeführt werden. Dieses bedeutet, dass stets eines der Übertragungsräder beim Überfahren der Lücke im Eingriff mit der Tragstruktur steht.

An dem Rahmen des Antriebsmoduls sind darüber hinaus Führungsrollen enthalten, die mit den vor beschriebenen Wirkflächen in Berührung stehen und somit auf engstem Raume eine sichere Führung des Antriebsmoduls gewährleisten. Durch das Aufsetzen der Kabine auf den Rahmen wird auch an dem oberen Teil Kabine eine weitere Ausbildung von Führungsrollen realisiert, so dass eine sichere Führung gewährleistet ist.

Wie bereits dargelegt wurde, kommen Turmdrehkrane aber auch Windkraftanlagen in Höhen von mehr als 100 m zum Einsatz. Dieses bedeutet, dass es sehr aufwendig ist, eine Stromversorgung, beispielsweise durch ein Schleppkabel, zu realisieren. Die Verwendung eines Schleppkabels bringt große Kosten und Anstrengungen mit, wenn ein weiteres Turmsegment nachträglich aufgesetzt wird. Die Verwendung von Stromschienen, die in den Turmsegmenten befestigt sein müssten, und damit in Verbindung stehenden Schleifkontakten an dem Antriebsmodul, scheiden bei dem rauen Betrieb auf den Baustellen gänzlich aus. Aus den vorgenannten Gründen wird deshalb auf ein autarkes Stromversorgungssystem zurückgegriffen, das im Wesentlichen durch einen Energiespeicher gebildet wird.

Ein derartiger Energiespeicher ist auswechselbar und kann somit nach einem Arbeitstag entfernt werden, um eine Wiederaufladung des Energiespeichers, der vorzugsweise als Akkumulator ausgebildet ist, durchzuführen. Es ist jedoch auch möglich, dass bei einer Abwärtsfahrt der Motor als Generator geschaltet wird und somit die erzeugte elektrische Energie zur Ladung des Energiespeichers Verwendung findet. In einer weiteren bevorzugten Vorgehensweise ist es möglich, dass der Energiespeicher auch in der Parkposition am Boden automatisch aufgeladen wird.

Zur Sicherheit ist innerhalb des Antriebsmoduls neben einer Fangbremse, die rein mechanisch arbeitet, auch eine Überlastsicherung für den Motor enthalten.

In einer bevorzugten Ausführungsform ist ein Turmdrehkran, der aus mehreren Teilsegmenten, die untereinander kraft- und formschlüssig verbunden werden, mit einer Vorrichtung in Form einer Kabine zur Personenbeförderung ausgestattet. Dabei befindet sich die Kabine innerhalb der durch die Turmsegmente begrenzten inneren Räumlichkeit. Die Kabine fährt dabei über Trag- und Führungsstrukturen, angetrieben durch ein Antriebsmodul in vertikaler Richtung innerhalb der Turmsegmente von einer Basis bis zu der Kranführerkabine.

Dabei ist es möglich, dass die Bewegung durch einen autarken Betrieb des Antriebsmoduls in Form eines Energiespeichers, der beispielsweise ein wieder ladbarer Akku sein kann, gegeben. Ein solcher Energiespeicher kann dabei gleichzeitig bei der Abwärtsfahrt der Kabine, die nach einer Aufwärtsfahrt in der Regel leer durchgeführt wird, nachdem der Kranführer seine Kranführerkabine betreten hat, gleichzeitig dazu führen, dass der Energiespeicher durch Umschaltung des Motors auf Generatorbetrieb wieder aufgeladen wird. Es ist jedoch auch möglich, in der Parkposition der Kabine eine Ladung des Energiespeichers vorzunehmen.

In einer weiteren bevorzugten Ausführungsform kann natürlich über Schleifkontakte bzw. über Schleppkabel eine Bestromung des elektrischen Antriebsmotors erfolgen.

In einer weiteren bevorzugten Ausführungsform ist es möglich, dass die Kabine zur Personenbeförderung nicht innerhalb der Turmsegmente platziert ist, sondern sich außerhalb der Turmsegmente befindet.

Um derartige Turmsegmente transportabel zu gestalten, weisen sie eine bestimmte Festlänge auf, um so beispielsweise mit LKWs von einer zur anderen Baustelle gebracht werden zu können. Diesem Umstand trägt die Erfindung ebenfalls Rechnung, dass die Trag- und Führungsstrukturen ebenfalls auf die Länge der Turmsegmente abgestimmt sind. Um jedoch Beschädigungen der Trag- und Führungsstrukturen zu vermeiden, sind diese gegenüber dem absoluten Außenmaß der Turmsegmente etwas geringer ausgebildet; ein Überstand über das Turmsegment entfällt. Dadurch werden entsprechende Beschädigungen vermieden.

Auf einer Baustelle, bei der ein solcher Turmdrehkran eingesetzt wird, ist ein rauer Betrieb die Tagesordnung. Deshalb sind die Trag- und Führungsstrukturen an den Distanzstreben der Turmsegmente federnd oder starr befestigt. Bei einer federnden Ausführung, die nachgiebig bei einer entsprechenden Belastung durch die verfahrende Kabine ist, werden beispielsweise Federelemente in Form von Federschenkeln eingesetzt. Bei zwei aneinander gesetzten Turmsegmenten entsteht so bei den fluchtend ausgeführten Trag- und Führungsstrukturen eine Lücke. Diese Lücke ist bewusst dort eingebaut worden, um nämlich Beschädigungen zu vermeiden.

Die Trag- und Führungsstruktur weist im Wesentlichen einen U-förmigen Querschnitt auf, wobei an einem der U-Schenkel die Tragstruktur angeformt ist. Eine solche Tragstruktur weist vorzugsweise eine Verzahnung auf, die mit Übertragungsrädern eines elektromotorischen Antriebes zusammenwirkt. Würde man an den Enden der Trag- und Führungsstruktur die Verzahnung einfach auslaufen lassen, so würde beim Übergang der Antriebsräder es zu einer Verhakung kommen. Aus diesem Grunde befindet sich an der Verzahnung eine Schräge, die zu einer Querseite des Tragschenkels über einen Radius quasi ausläuft. Dieses bedeutet, dass am Ende des Tragschenkels keine Verzahnung mehr vorhanden ist; ein Verhaken der Übertragungsräder mit der Verzahnung wird vermieden.

Das Antriebsmodul weist einen Antriebsmotor und ein Getriebe auf, wobei das Getriebe vorzugsweise beidseitig eine Antriebswelle aufweist. An den Enden der Antriebswelle sind jeweils Antriebsritzel angebracht, die so mit jeweils zwei Übertragungsritzeln auf jeder Seite zusammenwirken, dass das Antriebsmodul mit der Kabine im Betrieb die Lücken zwischen den aufeinander folgenden Trag- und Führungsstrukturen ohne Beeinträchtigung überfahren kann. Dieses wird dadurch erreicht, dass beim Erreichen einer derartigen Lücke zuerst das vordere Übertragungsritzel frei dreht und nur das hintere Übertragungsritzel die Kabine weiter vertikal verschiebt. Aufgrund der maßlichen Abstimmung wird jedoch nachfolgend beim Auftreffen auf die fluchtend angeordnete, darüber befindliche Trag- und Führungsstruktur das vordere Übertragungsritzel langsam in die stetig weiter ausgebildete Verzahnung eingreifen, um so die gesamte Kraftübertragung aufnehmen zu können, um das nachfolgende Übertragungsritzel auch die Lücke ohne Eingriff in die Verzahnung zu passieren zu lassen.

Die Antriebswelle und die Übertragungsritzel sind dabei in einer Lagerplatte gelagert, die Bestandteil des Antriebsmoduls ist. Auf dem Antriebsmodul wird auswechselbar die Kabine befestigt. Dabei weist die Kabine eine Tür in Form einer Vertikalöffnung vorzugsweise auf, so dass aufgrund dieser Vertikalöffnung kein weiterer Platzbedarf für eine Schwenktür notwendig ist.

Das Antriebsmodul wird vorzugsweise mittels eines Schleppkabels oder dergl. bestromt und kann mittels einer autarken Energieversorgung, vorzugsweise in Form eines Akkumulators betrieben werden. Sowohl das Antriebsmodul als auch die Kabine können mit einer Fangvorrichtung ausgestattet sein. Die Trag- und Führungsstrukturen in/an den Turmsegmenten können so montiert sein, dass gegenüber den Distanzstreben ein Rücksprung vorhanden ist.

Zur nachgiebigen Verbindungsbefestigung zwischen den Trag- und Führungsstrukturen und der Distanzstrebe können Schenkel eingesetzt werden. Zwischen fluchtenden Trag- und Führungsstrukturen aufeinandergesetzter Turmsegmente ist zweckmäßig eine Lücke vorhanden. Die Trag- und Führungsstrukturen weisen im Wesentlichen einen U-förmigen Querschnitt auf, wobei an einem Schenkel die Tragstruktur ausgebildet ist. Dabei ist die Tragstruktur vorzugsweise durch eine Verzahnung ausgebildet.

Die Erfindung wird nachfolgend anhand von möglichen Ausführungsbeispielen in den Zeichnungen wiedergegeben.

Es zeigt:
- Figur 1: eine Vorderansicht eines erfindungsgemäßen Antriebskonzeptes,
- Figur 2: wie Figur 1, jedoch in perspektivischer Darstellung,
- Figur 3: einen Teilausschnitt der Trag- und Führungsstruktur mit einer Befestigung in einer perspektivischen Darstellung,
- Figur 4: eine komplette Ausführung eines Antriebsmoduls mit einer Kabine und beidseitig angeordneten Trag- und Führungsstrukturen, die an Querstreben befestigt sind, in der Vorderansicht,
- Figur 5: wie Figur 4, jedoch in einer Rückansicht,
- Figur 6: ein Antriebsmodul in einer perspektivischen Darstellung,
- Figur 7: eine Teilansicht von zwei übereinander angeordneten Trag- und Führungsstrukturen in Verbindung mit einem Antriebsmodul,
- Figur 8: eine Draufsicht auf eine Seite einer Zusammenwirkung zwischen Tragund Führungsfunktion,
- Figur 9: eine weitere bevorzugte Ausführungsform eines Antriebskonzeptes,
- Figur 10: eine weitere bevorzugte Ausführungsform zur Verbindung der Trag- und Führungsstruktur an den Turmsegmenten,
- Figur 11: eine perspektivische Vorderansicht, bestehend aus einer Kombination einer Kabine mit einem Antriebsmodul in Wirkverbindung mit Trag- und Führungsstrukturen,
- Figur 12: wie Figur 11, jedoch von der Rückseite betrachtet,
- Figur 13: wie Figur 7, jedoch in einer weiteren bevorzugten Ausführungsform,
- Figur 14: eine Draufsicht auf eine Ansicht über das Zusammenwirken zwischen Trag- und Führungsfunktion und Antriebskonzeption,
- Figur 15: eine bevorzugte Ausführung eines Antriebsmoduls in einer perspektivischen Darstellung,
- Figur 16: wie Figur 15, jedoch in einer Schnittdarstellung gemäß einer Schnittlinie A-A,
- Figur 17: zwei Turmsegmente mit einer Kabine in einer Vorderansicht,
- Figur 18: wie Figur 17, jedoch in einer perspektivischen Darstellung,
- Figur 19: einen Blick in ein Turmsegment mit einer Kabine von oben,
- Figur 20: wie Figur 19, jedoch von unten gesehen,
- Figur 21: eine Teilansicht des Antriebsmoduls von oben betrachtet,
- Figur 22: eine seitliche Ansicht des Antriebsmoduls mit übereinander angeordneten Trag- und Führungsstrukturen,
- Figur 23: eine Kabine mit geöffneten Türen,
- Figur 24: eine Kabine in der Hinteransicht sowie
- Figur 25: eine Kabine in der Vorderansicht mit geschlossenen Türen.

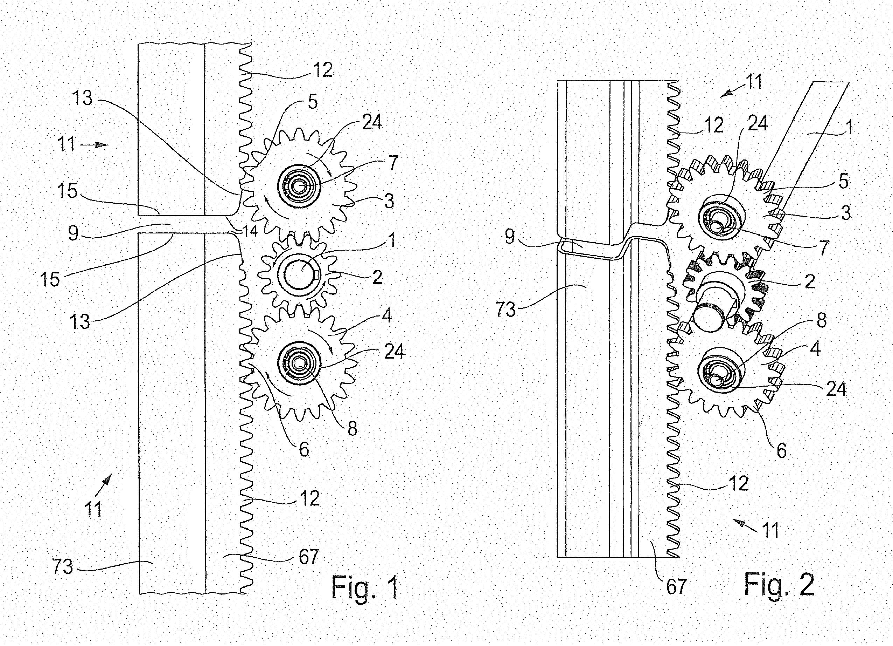

Mit der Figur 1 wird in einer Prinzipdarstellung die fluchtende Anordnung von zwei übereinander angeordneten Trag- und Führungsstrukturen 11 mit einer dazwischen befindlichen Lücke 9 wiedergegeben. Mit der oberen Trag- und Führungsstruktur 11 in der Figur 1 ist ein Übertragungsritzel 3 in einer Position dargestellt, bei der die Verzahnung 5 noch nicht in eine Verzahnung 12 der Trag- und Führungsstruktur 11 komplett eingreift. Dagegen ist bei der unteren Trag- und Führungsstruktur 11 die Verzahnung 6 des Übertragungsritzels 4 innerhalb der Verzahnung 12 voll im Eingriff. Die Übertragungsritzel 3 und 4 sind mittels Lagern 24 und Achsen 7 und 8 innerhalb einer Lagerplatte 28 gelagert. Ein Ende der Antriebswelle 1 ist ebenfalls innerhalb der Lagerplatte 28 gelagert. Auf der Antriebswelle 1 befindet sich ein Antriebsritzel 2, dessen Verzahnung mit den Verzahnungen der Übertragungsritzel 3 und 4 zusammen wirkt.

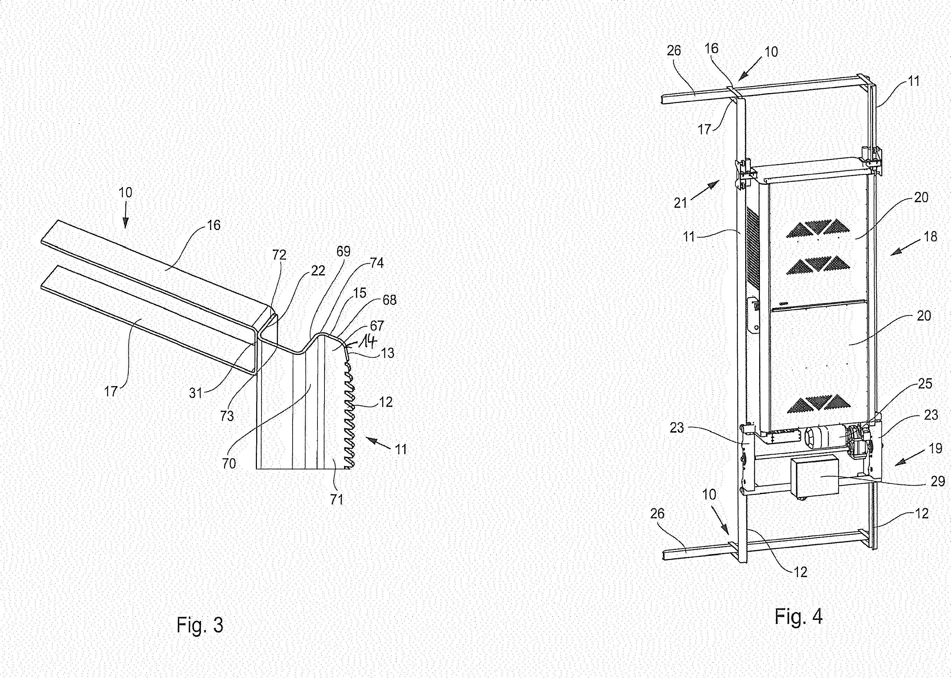

Aus der Darstellung der Figur 3 kann deutlich der Verlauf der Verzahnung 12 am Ende zu einer Stirnseite 15 der Trag- und Führungsstruktur 11 entnommen werden. Dabei nimmt die Verzahnung 12 stetig ab und endet in einer Anlaufschräge 13, die durch einen Übergang in Form eines Radius 14 in die Stirnseite 15 übergeht. Aus der Figur 2 ist deutlich zu entnehmen, dass das Übertragungsritzel 3 bereits die Lücke 9 überwunden hat und mit seiner Verzahnung 5 in die obere Verzahnung 12 anfängt einzugreifen. Dagegen ist das Übertragungsritzel 4 mit seiner Verzahnung 6 noch voll im Eingriff mit der unteren Verzahnung 12. Dieses bedeutet, dass auch bei dem Überfahren der Lücke 9 zwischen den Trag- und Führungsstrukturen 11 stets eines der Übertragungsritzel 3 oder 4 im Eingriff mit der Verzahnung 12 steht. Damit ist ein Überwinden der Lücke 9 gegeben.

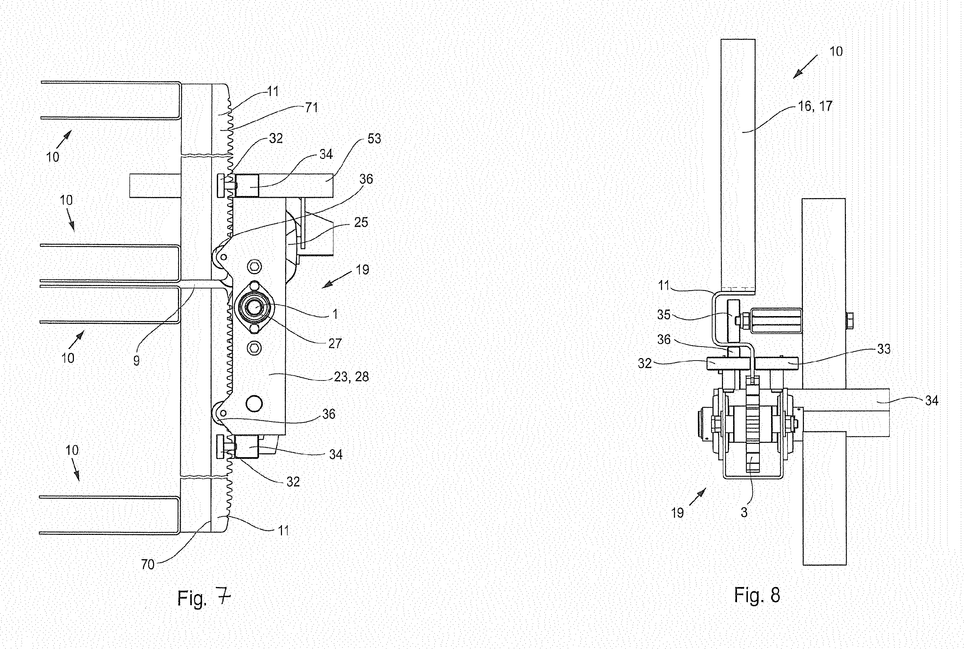

Aus der Figur 7 ist die Lagerplatte 28, die gleichzeitig als Gehäuse 23 ausgebildet ist, zu entnehmen. Dabei ist die Antriebswelle 1 über ein Lager 27 in der Lagerplatte gelagert. Ebenfalls sind in der Lagerplatte 28 Führungsrollen 36 vorhanden, die gegen die Trag- und Führungsstruktur 11 angestellt sind. Dieses kann insbesondere der Figur 8 entnommen werden. Dabei befinden sich im Zusammenwirken mit den Führungsrollen 36 Führungsrollen 35, die im Inneren der U-förmigen Ausbildung der Trag- und Führungsstruktur 11 als Gegenrollen wirken. Diese Führungsrolle 35 ist an einem Rahmen 34 des Antriebsmoduls 19 gelagert. Der Figur 8 kann auch das Übertragungsritzel 3 entnommen werden, welches mit der Trag- und Führungsstruktur 11 zusammen wirkt. Als Gegendruck zu der Führungsrolle 32 ist eine Führungsrolle 33 vorhanden, die beide gegen den auskragenden Schenkel der Tragstruktur 11 angestellt sind.

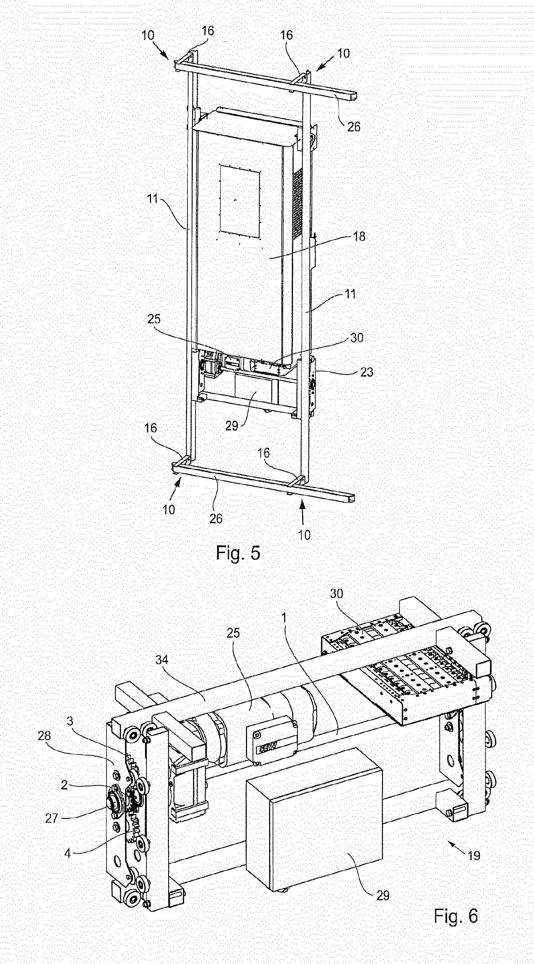

Der Aufbau des Antriebsmoduls 19 kann in einer bevorzugten Ausführungsform der Figur 6 entnommen werden. Dabei ist ein Rahmen 34 vorhanden, der zum einen die gesamte Antriebsmechanik beinhaltet und darüber hinaus als Auflager für die Kabine 18 dient. Innerhalb des Rahmens 34 ist ein Antriebmotor 25 in Verbindung mit einem Getriebe dargestellt. Das Getriebe ist so ausgebildet, dass in diesem Ausführungsbeispiel die Antriebswelle 1 auf beiden Seiten eine Antriebsmechanik in Form von Übertragungsritzeln 3, 4 in Verbindung mit dem Antriebsritzel 2 bildet.

Die Figur 3 zeigt noch einmal in einer perspektivischen Ansicht die Trag- und Führungsstruktur 11, die über eine Verbindung mit einem Grundschenkel 31 mit der Befestigung 10 an einem ortsfesten Teil, beispielsweise einer Strebe 26 eines Turmsegmentes oder dergleichen, ausgebildet wird. Dabei ist die Befestigung 10 als U-förmige, vorzugsweise aus Federstahl gefertigte Einrichtung mit Federschenkeln 16 und 17 dargestellt. Dieses kann auch noch einmal insbesondere der Figur 8 entnommen werden, bei der auf der linken Seite zwei übereinander angeordnete Trag- und Führungsstrukturen 11 jeweils an ihren Enden mit den Befestigungen 10 versehen sind.

Die Figuren 6 und 7 geben eine Komplettierung eines Antriebsmoduls 19 mit der Kabine 18 eines Aufzugs in Verbindung mit seitlich angeordneten Trag- und Führungsstrukturen 11 wieder. Dabei sind die Trag- und Führungsstrukturen 11 mittels der Befestigungen 10 an einer Strebe 26 im oberen und unteren Bereich befestigt. Die Kabine 18 ist mit einem Verschluss 20 in Form einer aus zwei Teilen bestehenden Vertikaltür dargestellt worden.

Die Kabine 18 befindet sich auswechselbar auf dem Antriebsmodul 19 und weist in ihrem oberen Bereich eine Führungseinheit 21 auf jeder Seite auf, die mit den Trag- und Führungsstrukturen 11 auf jeder Seite in Wirkverbindung stehen.

Aus der Figur 7 kann die rückwärtige Ansicht auf eine komplette Einheit der vorgenannten Art entnommen werden. Der Antriebsmotor 25 wird dabei von einer Energieversorgung 30 über eine Steuerung 29 betrieben. Eine derartige Energieversorgung kann beispielsweise in Form von Akkumulatoren bewerkstelligt werden.

In der Figur 3 ist eine perspektivische Darstellung einer ersten bevorzugten Ausführungsform einer Trag- und Führungsstruktur 11 dargestellt. Diese Trag- und Führungsstruktur 11 ist über eine Verbindung 22 mit einer U-förmig ausgebildeten Befestigung 10, die distanziert zueinander Federschenkel 16, 17 aufweist, die durch einen Grundschenkel 31 distanziert werden, verbunden. Die Trag- und Führungsstruktur 11 besteht dabei aus einem Basisschenkel 72, der mit der Befestigung 10 verbunden ist. Ausgehend von dem Basisschenkel 72 ist in einem Winkel von 90° ein Distanzschenkel 73 angeordnet. Am Ende des Distanzschenkels ist ein Laufschenkel 74 dargestellt. Somit wird durch den Seitenschenkel 72, den Distanzschenkel 73 und den Laufschenkel 74 eine U-förmige Ausbildung der Trag- und Führungsstruktur 11 wiedergegeben. An der freien Seite des Laufschenkels 74 ist ein Tragschenkel 71 so angeformt, dass dieser auskragend zu der U-Form gestaltet ist. Der Laufschenkel 74 hat zu beiden Seiten seiner Flächen Laufflächen 69 und 70 für Führungsrollen ausgebildet. Ebenfalls sind an dem Tragschenkel 71 an seinen Außenflächen Laufflächen 67 und 68 vorhanden. Der auskragende Teil des Tragschenkels 71 hat an seiner Längsseite eine Verzahnung 12, die in Längserstreckung über die gesamte Ausdehnung des Tragschenkels 71 ausbildet ist. Zu Stirnseiten 15 der Trag- und Führungsstruktur 11 läuft die Verzahnung 12 über eine Anlaufschräge 13 aus. Der Auslauf wird durch einen Radius 14 in die Stirnseite 15 eingeleitet.

Den Figuren 1 und 2 kann die Anordnung von zwei zueinander fluchtenden Trag- und Führungsstrukturen 11 mit einer dazwischen befindlichen Lücke 9 entnommen werden. Auf die Wiedergabe der Befestigung 10 ist in diesen Darstellungen verzichtet worden. Über eine Antriebswelle 1 wird auf beiden Endseiten mittels Antriebsritzeln 2 die Drehbewegung auf die mit den Antriebsritzeln 2 in Wirkverbindung stehenden Übertragungsritzel 3, 4 übertragen. Die Übertragungsritzel 3, 4 sind über Lager 24 gelagert und stehen mit der Verzahnung 12 im Eingriff. Dieses geschieht auch in dem Lückenbereich
9, wie dieses insbesondere der Figur 1 zu entnehmen ist. Dabei greifen die Verzahnungen 5, 6 in die Verzahnung 12 ein und erzeugen somit durch die Drehbewegung der Antriebswelle 1, die Bestandteil eines Antriebsmoduls 19 ist, die Ortsveränderung einer Kabine 18.

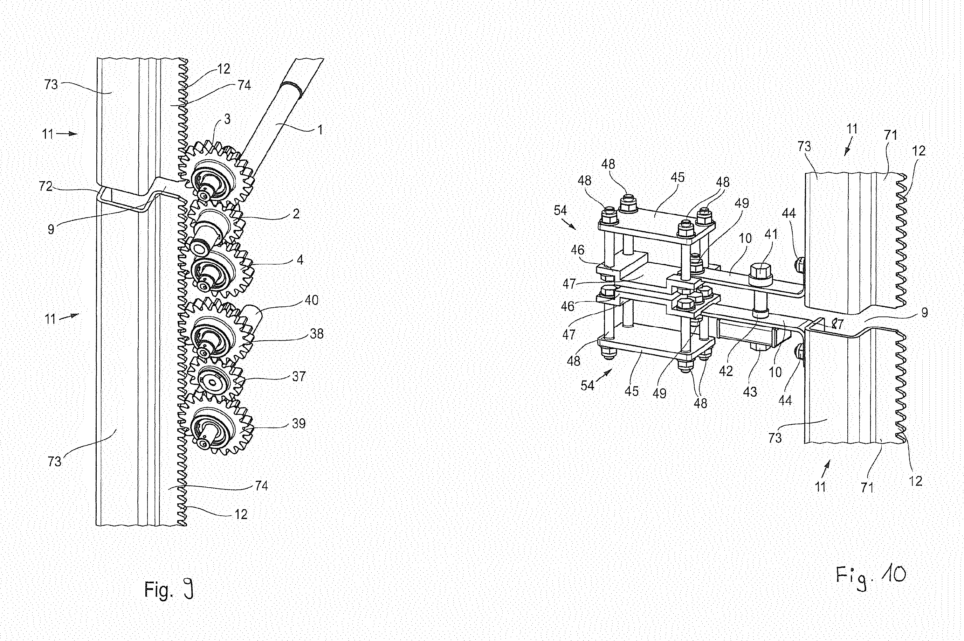

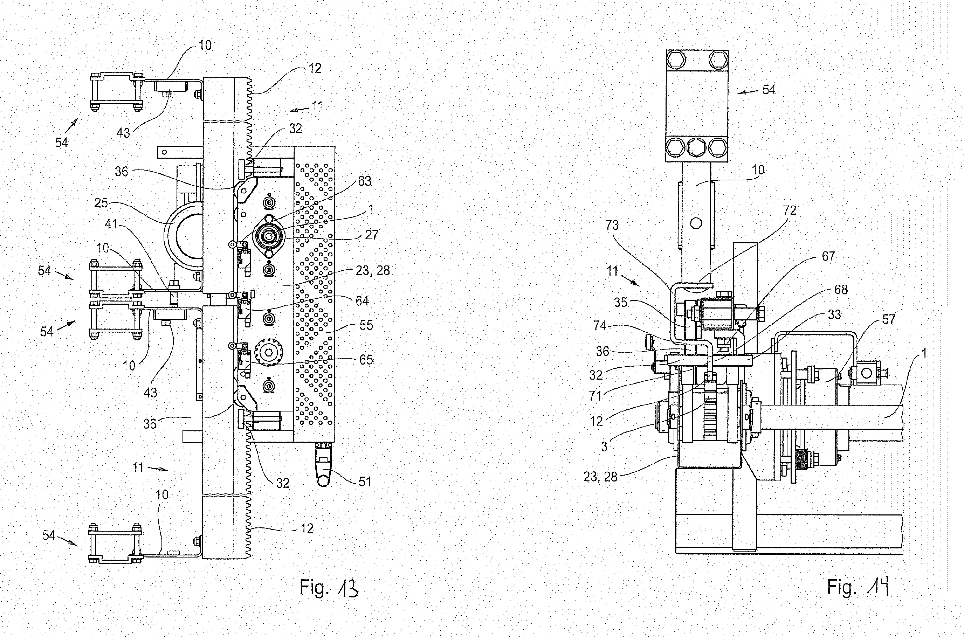

Eine weitere bevorzugte Ausbildung der Trag- und Führungsstruktur 11 kann der Figur 13 entnommen werden. Bei dieser bevorzugten Ausführungsform wird hier auf das Auslaufen der Verzahnung 12 zu den Stirnseiten 15 verzichtet. Dieses bedeutet, dass die Verzahnung 12 über den gesamten Verlauf der Trag- und Führungsstruktur 11 gleichbleibend ausgeführt ist. Eine derartige Ausführung ist ohne Probleme möglich, wie die Figur 10 deutlich macht. Voraussetzung für einen ordnungsgemäßen Betrieb ist jedoch die exakte Einstellung der Lücke 9. Dieses wird durch ein Justierelement 41 erreicht. Das Justierelement 41 ist in einer weiteren bevorzugten Ausführung in der Befestigung 10 durchdringend eingebracht. Die Befestigung 10 ist in diesem Ausführungsbeispiel als winkelförmige Ausbildung dargestellt worden. Dabei ist ein Schenkel des Winkels über eine Befestigung 44 an dem Seitenschenkel 87 angeschlagen. Das andere Ende der Befestigung 10 greift dabei in eine Befestigungsvorrichtung 54, in der das Ende des Schenkels der Befestigung 10 über eine Verbindung 49 festgelegt ist. Die Ausbildung der Befestigungsvorrichtung 54, die zum Anschluss an einen Teil des Turmsegmentes dient, besteht im Wesentlichen aus einer Lasche 45 und eine mittels Verbindungselement 48 distanziert angeordnete Fixierlasche 46. Innerhalb der Fixierlasche 46 ist zur einfachen Montage und Ausrichtung an dem Turmsegment eine Vertiefung 47. Durch das Anziehen der Verbindungselemente 48 wird somit eine Festlegung der Enden der Trag- und Führungsstrukturen 11 ermöglicht. Ausschließlich an den Enden der Trag- und Führungsstruktur 11 erfolgt eine Befestigung mit dem Turmsegment. Unterhalb der beschriebenen Ausbildung der oberen Trag- und Führungsstruktur 11 ist eine weitere Trag- und Führungsstruktur 11 mit entsprechend gleicher Befestigung und Befestigungsvorrichtung 54 dargestellt worden.

Das Justierelement 41 durchgreift die längeren Schenkel der Befestigungen 10. Das Justierelement 41 ist dabei als rundes Bauteil ausgeführt, das entsprechend in Abstimmung mit der Gesamtkonstruktion einen Anschlag 42 aufweist, durch den das Maß der Lücke 9 bestimmt wird. Dabei wird das Justierelement 41 mit dem Anschlag 42 gegen die untere Seite der Befestigung 10 gedrückt und mittels einer Mutter 43 wird das Justierelement 41 festgesetzt. So sind Toleranzen und maßliche Verwerfungen auszugleichen, denn durch den festen Abstand des Anschlages 42 zu einem Kopf des Justierelementes 41 wird stets der gleiche Abstand zwischen den Trag- und Führungsstrukturen 11 für die Lücke 9 hergestellt. Durch diese Verwendung des Justierelementes 41 ist es somit möglich, dass auf das Auslaufen der Verzahnung 12 zu den Stirnseiten 15 gemäß den Figuren 1 bis 3 verzichtet werden kann. Auch wird mit Hilfe des Justierelementes 41 ohne Prüfung des Abstandmaßes die Lücke 9 exakt eingestellt.

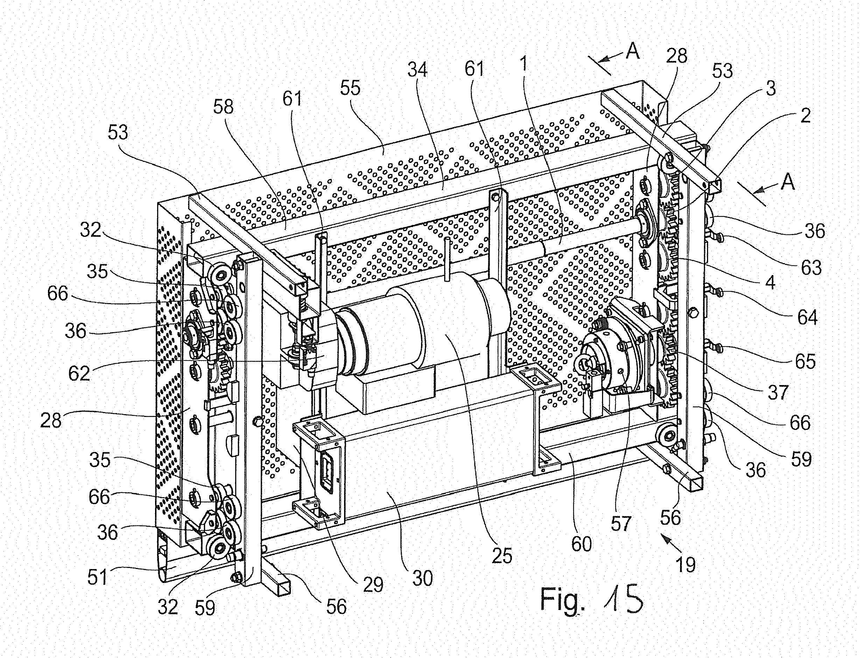

In der Figur 15 ist in einer Einzelansicht das Antriebsmodul 19 dargestellt worden. Hier zeigt sich der grundsätzliche Aufbau der tragenden Teile mit dem Rahmen 34. Der Rahmen 34 besteht im Wesentlichen aus einem oberen Verbindungsholm 58, zu dem parallel am unteren Ende ein Verbindungsholm 60 vorhanden ist. Die Verbindung zwischen dem Verbindungsholm 58 und dem Verbindungsholm 60 bilden auf jeder Seite Distanzholme 59, die in dem Ausführungsbeispiel der Figur 15 nicht direkt mit den Verbindungsholmen 58, 60 verbunden sind, sondern mit oberen Basisholmen 53 und unteren Querprofilen 56. Durch diese Konstruktion des Rahmens 34 wird in mehrfacher Hinsicht eine leichte und auch eine in der Montage bzw. im Reparaturfall sehr einfach zugängliche Konstruktion gewählt. Während auf dem Basisholm 53 die Kabine 18 befestigt wird, ist zwischen den Verbindungsholmen 58, 60 über Halter 61 auf einer Seite eine Steuerung 29 und andererseits ein Antriebsmotor 25 sowie darunter ein Energiespeicher 30 befestigt. Der Energiespeicher 30 ist so befestigt, dass dieser auswechselbar gestaltet ist.

Der Getriebeausgang ist mit der Antriebswelle 1 verbunden. Die Antriebswelle 1 ist auf beiden Seiten des Antriebsmoduls 19 in Lagerelementen 28, in denen auch Lager 27 eingebettet sind, gelagert. Gleichzeitig sind darüber hinaus die zur Führung des Antriebsmoduls 19, sowie der Kabine 18 notwendigen Führungsrollen 32, 33, 35, 36, 66 für das Zusammenwirken mit den Trag- und Führungsstrukturen 11 an dem Rahmen 34 direkt oder indirekt in den seitlichen Halterungen 23 oder Lagerelementen 28 gelagert.

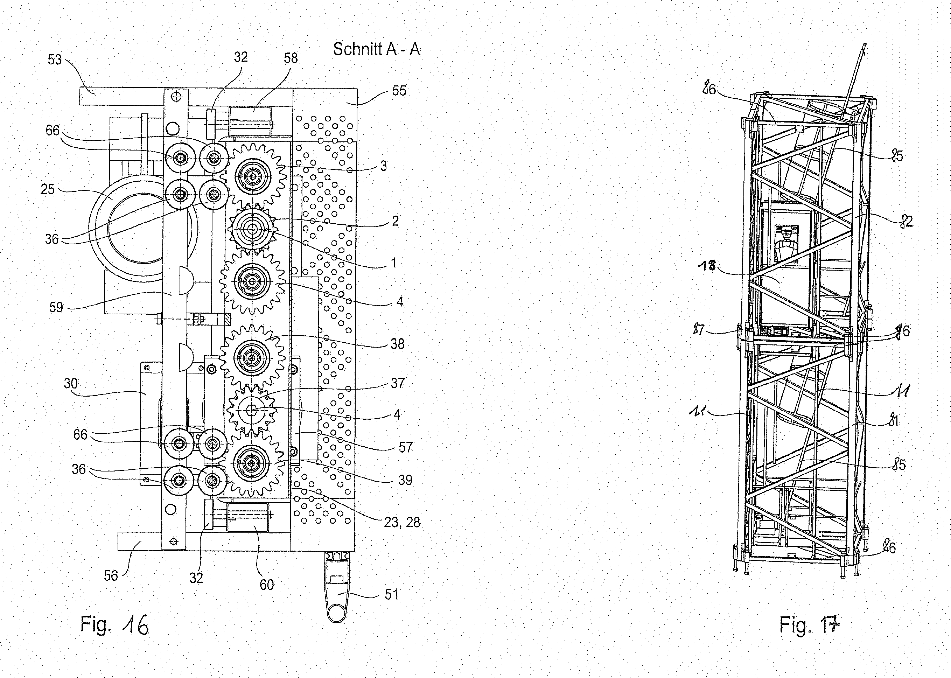

Mit der endseitigen Lagerung der Antriebswelle 1 sind dort auch die Antriebsritzel 2 angebracht. Das Zusammenwirken der Antriebsritzel 2 mit den Übertragungsritzeln 3, 4 kann insbesondere auch aus der Figur 16 aus einem Schnitt A-A entnommen werden.

Das Antriebsmodul 19 beinhaltet darüber hinaus auch einen oberen Endschalter 63, der im oberen Bereich des Antriebsmoduls 19 angebracht ist, um bei einer Fahrt der Kabine 18 nach oben, dort am vorgesehenen Ort diese Fahrt bei einer Nichtabschaltung der Steuerung 29 abzuschalten. Das gleiche wird in analoger Weise mit durch einen unteren Endschalter 65 ausgeführt, der die Fahrt in den bodennahen Bereich damit beendet. Sollten weitere Haltepunkte gewünscht werden, so ist es möglich, durch einen Sonderschalter 64 dieses in Verbindung mit entsprechenden Schaltpunkten 52 an den Trag- und Führungsstrukturen 11 ausführen zu können.

Den hinteren Abschluss des Antriebsmodules 19 bildet eine Abdeckung 55, die vorzugsweise mit einem Lochblech versehen ist, um so einen Wärmestau durch den Motor 25 zu unterbinden. Im unteren Bereich des Antriebsmoduls 19 ist darüber hinaus eine Sensorleiste 51 vorhanden, die eine Abschaltung des Antriebsmotors 25 bewirkt, sobald das Antriebsmodul 19 auf einen Endpunkt bzw. Hindernis auffährt. Ein weiteres Sicherheitsmerkmal stellt eine Überlastsicherung 62 dar, die bei einer Überladung der Kabine 18 das Antriebsmodul 19 stillsetzten würde.

Eine weitere Sicherungseinrichtung bildet eine Fangbremse 57, die ausgangsseitig ein Übertragungsritzel 37 aufweist, dessen Verzahnung mit Verzahnungen von Ritzeln 38 und 39 in Wirkverbindung steht. Die Funktion einer derartigen Fangbremse 57 beruht in der Regel auf einer überhöhten Geschwindigkeit, die durch Fliehkraft eine Stillsetzung des Antriebsmoduls 19 mit der Kabine 18 bewirkt. Wegen der vorhandenen Lücken 9 zwischen den Trag- und Führungsstrukturen 11 ist auch hier in analoger Weise zu dem Antriebsstrang die Anordnung mit den Ritzeln 38, 39 ausgeführt worden (siehe Figur 9), um so auch sicher den Bereich der Lücken 9 überfahren zu können.

Oberhalb des Bereiches der Fangbremse 57 mit ihrer betrieblichen Anordnung ist das auf der Antriebswelle 1 gelagerte Antriebsritzel 2 sichtbar, das mit den darüber und darunter befindlichen Übertragungsritzeln 3, 4 zusammenwirkt.

Aus der Schnittdarstellung A-A ist nach Figur 16 ferner die Anordnung von jeweils zwei Führungsrollenpaaren der Führungsrollen 36 sowie darüber die Führungsrollenpaarung der Führungsrollen 66 zu entnehmen. Dadurch, dass quasi übereinander jeweils Rollenpaare angeordnet sind, wird ein weiteres hohes Sicherheitspotential erreicht, so dass bei einem Ausfall einer der Führungsrollen stets eine sichere weitere Führung gewährleistet ist. In einem Winkel von 90° sind dazu die Führungsrollen 32 an den Verbindungsholmen 58 und 60 zu erkennen. Die Rollenpaare dienen auch der sicheren Überfahrt der Lücken 9, so dass stets Führungsrollen 36, 66 mit den Trag- und Führungsstrukturen 11 Kontakt haben.

Gemäß Figur 7 ist die bevorzugte Ausführungsform der Befestigungen 10 zweier übereinander angeordneter Trag- und Führungsstrukturen 11 in Verbindung mit einer Teilansicht des Antriebsmoduls 19 dargestellt worden. Auch hier kann der Einsatz der Führungsrollen 32 auf der Oberfläche des Tragschenkels 71 entnommen werden. In einem Winkel von 90° dazu sind die Führungsrollen 36 auf der Lauffläche 70 der Trag- und Führungsstruktur 11 zu entnehmen.

Im Gegensatz zu der Ausführung der Figur 7 ist in den Figuren 10 und 13 in analoger Ausführung die Befestigung 10 als winkelförmige Befestigung mit den Befestigungsvorrichtungen 54 dargestellt. Zwischen zwei benachbarten Befestigungen 10 kann auch die Anordnung des Justierelementes 41 mit der Mutter 43 entnommen werden. Auf der Halterung 83 bzw. dem Lagerelement 28 sind vorzugsweise die Endschalter 63, 65 und der Sonderschalter 64 mit ihren Schaltfahnen dargestellt worden.

Mit der Darstellung der Figur 14, die einen Ausschnitt aus dem Bereich des Antriebsmoduls 19 im Bereich der Fangbremse 57 zeigt, wird deutlich, dass das Übertragungsritzel 3 mit der Verzahnung 12 der Trag- und Führungsstruktur 11 in Wirkverbindung steht. An den Laufflächen 67, 68 des Tragschenkels 71 greifen die Führungsrollen 32, 33 an. An dem um 90° versetzten Laufschenkel 74 greifen dabei die Führungsrollen 35 und 36 an.

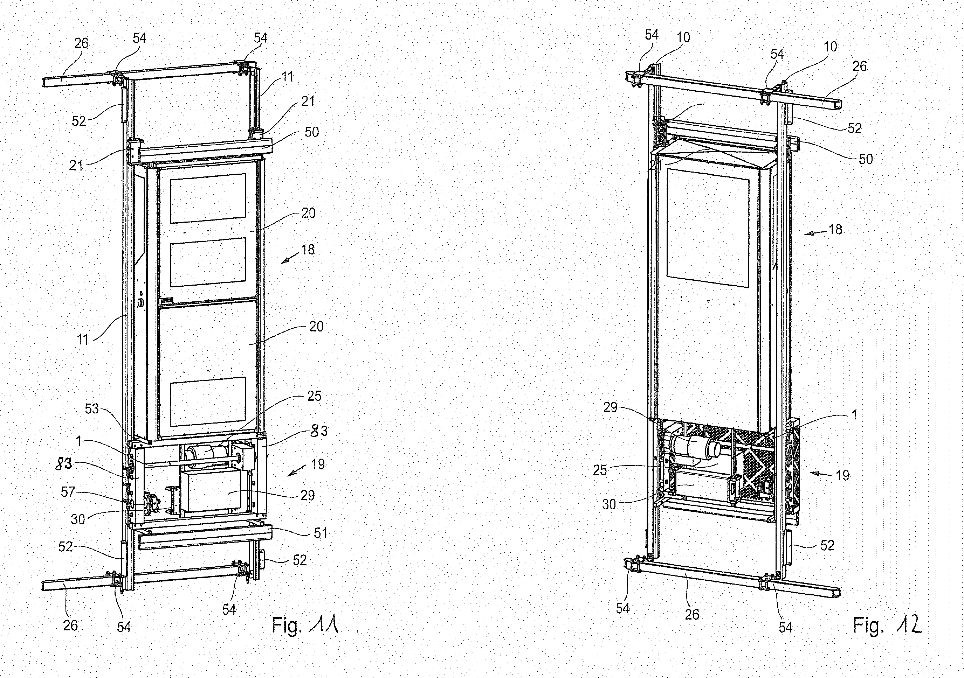

Das Zusammenwirken der Kombination, bestehend aus dem Antriebsmodul 19 mit der Kabine 18 und den Trag- und Führungsstrukturen 11 in einem montierten Zustand zwischen Streben 26 eines Turmsegmentes oder dergleichen, zeigen die Figuren 11 und 12. Während die Figur 11 die Vorderansicht der Kabine 18 mit einer Teilung des Verschlusselementes 20 wiedergibt, ist in der Figur 12 der rückseitige Teil der Darstellung gemäß Figur 11 aufgezeichnet worden. Die Befestigung der Trag- und Führungsstrukturen 11 in einer Distanz, die der Breite der Kabine 18 im Wesentlichen entspricht, wird über die Befestigungsvorrichtungen 54 ausgeführt. Die Kabine 18 weist dabei im oberen Bereich Führungseinheiten 21 auf, die in Verbindung mit den an den Antriebsmodulen 19 vorhandenen Führungseinheiten eine sichere Führung der gesamten Anlage ausführt.

Neben der unterseitigen Anordnung der Sensorleiste 51 ist auch oberhalb der Kabine 18 eine weitere Sensorleiste 50 vorhanden. Dadurch können in den Fahrbereich hineinragende Gegenstände oder dergleichen sowohl bei der Abwärtsfahrt als auch bei der Aufwärtsfahrt sicher erkannt werden. Auch wird deutlich, dass durch die unterschiedliche Ausführung der Platzierung der Schaltpunkte 52 ein weiteres Sicherheitspotential erreicht wird, um so eine ordnungsgemäße Abschaltung in jedem Fall des Antriebsmoduls 19 durchführen zu können.

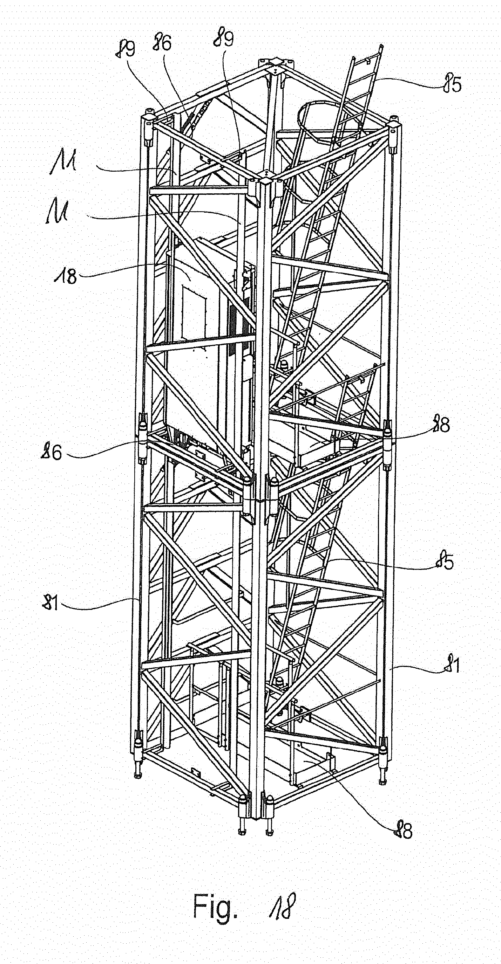

Die Figur 17 soll deutlich machen, wie einzelne Turmsegmente 81, 82 übereinander angeordnet sind und untereinander kraft- und formschlüssig verbunden sind. Innerhalb der Segmente befinden sich Aufstiege 85. Die Querverbindung zwischen einem Holm eines Turmsegmentes 81 oder 82 bildet eine Distanzstrebe 86. Innerhalb des Turmsegmentes 82 befindet sich an Trag- und Führungsstrukturen 11 eine Kabine 18 mit einer Person. Angetrieben wird die Kabine 18 durch einen Antriebsmotor 25. Durch die Figur 18 wird in der perspektivischen Darstellung die gesamte Anordnung innerhalb eines Turmsegmentes noch einmal deutlich. Über den Aufstieg 85 erreicht der Kranführer jeweils eine Plattform 88, um dann anschließend einen weiteren Aufstieg 85 zu nehmen.

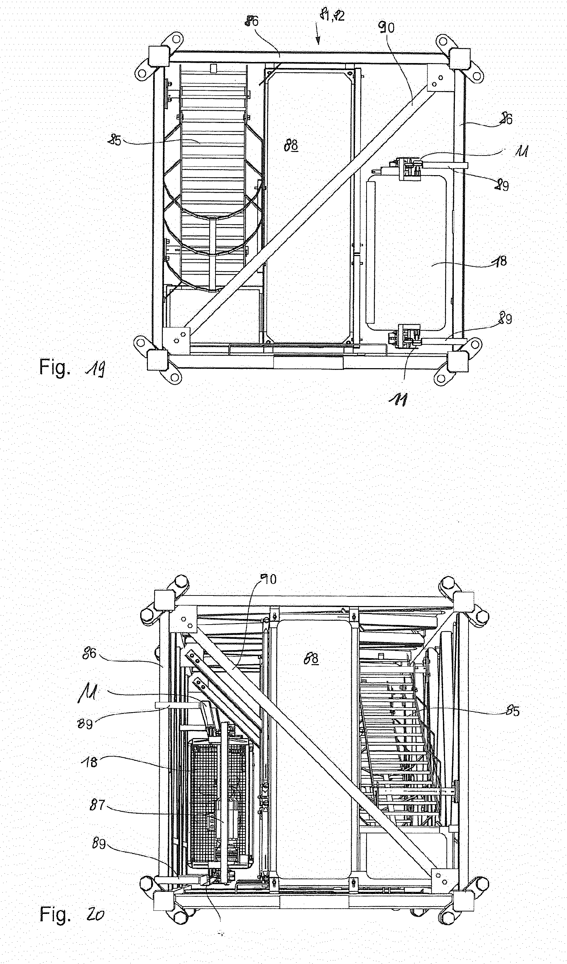

Die Figur 19 gibt in einer Draufsicht ein Turmsegment 81, 82 wieder. Die Distanzstreben 86 sind vorzugsweise von gleichen Abmessungen, so dass eine problemlose Verbindung der Turmsegmente 81, 82 möglich ist. Zur Stabilisierung geht quer in der Diagonalen durch das Turmsegment 81, 82 eine Diagonalstrebe 90. Im rechten unteren Teil ist die Kabine 18 von oben zu sehen. Die Trag- und Führungsstrukturen 11 sind über Befestigungen 89, auf die noch eingegangen wird, an einer Distanzstrebe 86 befestigt.

In gleicher Darstellungsweise ist gemäß der Figur 20 die gesamte Anordnung von unterhalb der Kabine 18 dargestellt worden. Dabei wird deutlich, dass der Boden der Kabine mit einem Gitterrost versehen ist, um so auch einen Blickkontakt nach unten hin für die fahrende Person sicher zu stellen.

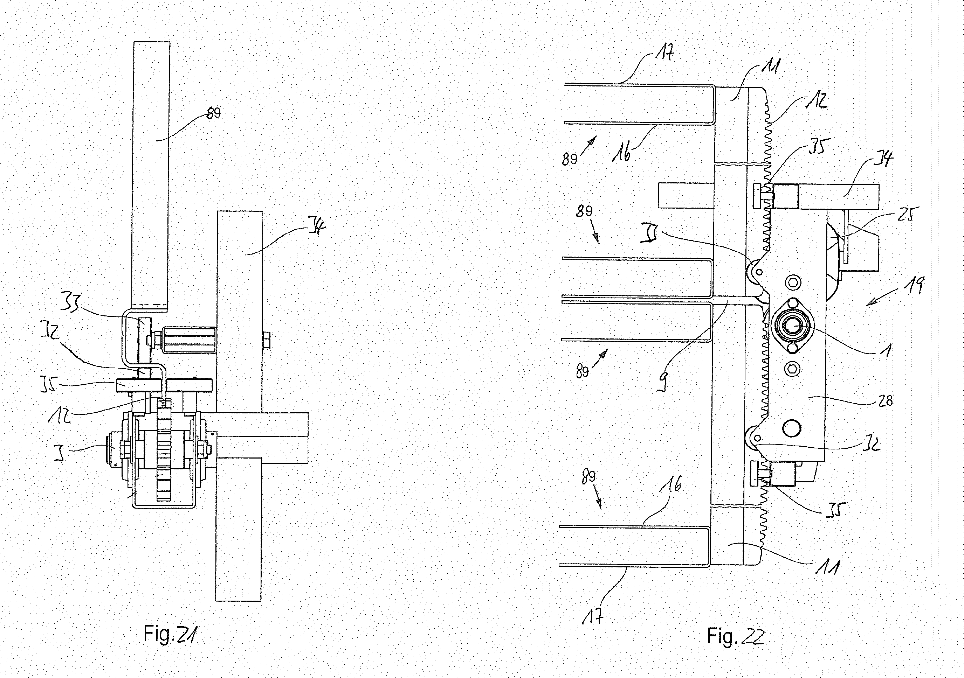

Die Fortbewegung in vertikaler Richtung, d. h. nach oben und nach unten wird mittels der Trag- und Führungsstrukturen 11, die auf jeder Seite der Kabine vorhanden ist, durchgeführt. Befestigt wird diese Trag- und Führungsstruktur über die Befestigungen 89, die vorzugsweise als Federschenkel 16 und 17 an der Distanzstrebe 86 befestigt werden. Wie der Figur 22 deutlich zu entnehmen ist, befindet sich zwischen zwei fluchtend angeordneten Trag- und Führungsstrukturen 11 eine Lücke 9. In diesem Bereich ist auch die Verzahnung 12, die an den Trag- und Führungsstrukturen 11 vorhanden ist, auslaufend zum Bereich der Lücke 9 hin ausgeführt. So ist es möglich, dass aufgrund der übereinander angeordneten Übertragungsritzel 3, 4 mit dazwischen liegendem Antriebsritzel 2, das auf einer Antriebswelle 1 von dem Antriebsmotor 25 angetrieben wird, diese ohne Probleme zu überfahren. Aufgrund der Federschenkel 16, 17 ist bei einem nicht ordnungsgemäßen Eingreifen der Verzahnung der Übertragungsritzel ineinander ein leichter Ausgleich möglich.

Neben Führungsrollen 35, die an die Wand der Tragstruktur 11 ansetzen, sind darüber hinaus Führungsrollen 32, 33 vorhanden, die innerhalb eines U-förmigen Raumes sowohl von außen als von innen gegen die Trag- und Führungsstruktur 11 gerichtet sind. Somit sind die Führungsrollen 32, 33 und 35 in einem Winkel von 90° zueinander angeordnet. Die Antriebswelle 1 ist in einer Lagerplatte 28, die an einem Rahmen 34 des Antriebsmoduls 19 befestigt ist, gelagert.

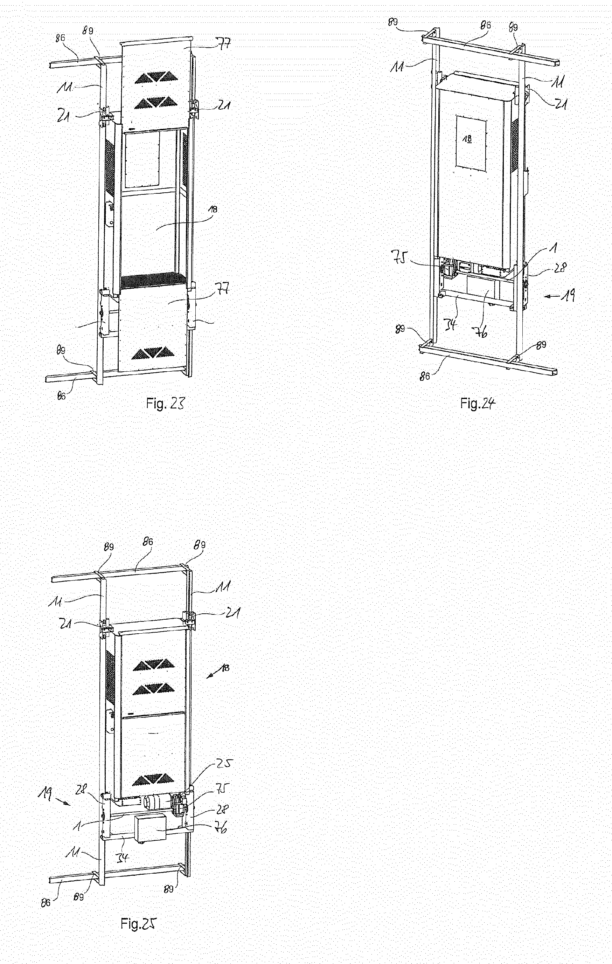

In den Figuren 24 und 25 kann eine beispielhafte Ausführung einer Kabine 18 wiedergegeben werden. Dabei befindet sich unterhalb der Kabine 18 das Antriebsmodul 19 auf dem auch die Kabine 18 befestigt ist. Innerhalb des Antriebsmoduls 19 sind eine Steuerung 76 und das Getriebe 75. Im oberen Teil der Kabine 18 befinden sich ebenfalls Führungselemente, die mit der Führungsstruktur 11 zusammenwirken.

Als besonders zweckmäßig hat sich die Ausführung eines Vertikaltores oder Tür 77 gezeigt, weil dadurch kein weiterer Raum beim Öffnen und Schließen benötigt wird.

Zur Absicherung gegen Absturz weist die Kabine eine 18 Fangvorrichtung auf.

### Bezugszeichenliste:

- 1: Antriebswelle
- 2: Antriebsritzel
- 3, 4, 37: Übertragungsritzel
- 5, 6, 12: Verzahnung
- 7, 8: Achse
- 9: Lücke
- 10, 44, 89: Befestigung
- 11: Trag- und Führungsstruktur
- 13: Anlaufschräge
- 14: Radius
- 15: Stirnseite
- 16, 17: Federschenkel
- 18: Kabine
- 19: Antriebsmodul
- 20: Verschlusselement
- 21: Führungseinheit
- 22, 49: Verbindung
- 23: Gehäuse
- 24, 27: Lager
- 25: Antriebsmotor
- 26: Strebe
- 28: Lagerplatte
- 28: Lagerelement
- 29, 76: Steuerung
- 30: Energieversorgung
- 30: Energiespeicher
- 31: Grundschenkel
- 32, 33, 35, 36, 66: Führungsrolle
- 34: Rahmen
- 38, 39: Ritzel
- 41: Justierelement
- 42: Anschlag
- 43: Mutter
- 45: Lasche
- 46: Fixierlasche
- 47: Vertiefung
- 48: Verbindungselement
- 50, 51: Sensorleiste
- 52: Schaltpunkte
- 53: Basisholm
- 54: Befestigungsvorrichtung
- 55: Abdeckung
- 56: Untere Querprofile
- 57: Fangbremse
- 58, 60: Verbindungsholm
- 59: Distanzholm
- 61: Halter
- 62: Überlastsicherung
- 63: oberer Endschalter
- 64: Sonderschalter
- 65: unterer Endschalter
- 67, 68, 69, 70: Lauffläche
- 71: Tragschenkel
- 72: Basisschenkel
- 73: Distanzschenkel
- 74: Laufschenkel
- 75: Getriebe
- 77: Vertikaltor/-tür
- 78: Fangvorrichtung
- 81, 82: Turmsegment
- 83: Halterung
- 85: Aufstieg
- 86: Distanzstrebe
- 87: Seitenschenkel
- 88: Plattform
- 90: Diagonalstrebe

## Patentansprüche

1. Antriebssystem in Form eines Antriebsmoduls zur vertikalen Fortbewegung für eine durch einen Antriebsmotor (25) angetriebene Kabine (18) oder dergleichen entlang wenigstens einer aus mehreren einzelnen fluchtend angeordneten Trag- und Führungsstrukturen (11) gebildeten Verzahnung (12), wobei über eine Antriebswelle (1) mittels eines Antriebsritzels (2) Übertragungsritzel (3,4) angetrieben werden, die mit einer Verzahnung (5,6) der Verzahnung (12) zusammenwirken,
**dadurch gekennzeichnet,**
**dass** jeweils an den zueinander gerichteten Stirnseiten (15) der Trag- und Führungsstrukturen (11) die Verzahnung (12) eine Anlaufschräge (13) der Gestalt aufweist, dass die Verzahnung (12) so ausläuft, so dass diese über einen Radius (14) oder dergleichen in Stirnseiten (15) der Trag- und Führungsstruktur (11) an wenigstens einer Seite der Kabine (18) übergehen.

2. Antriebssystem nach Anspruch 1,
**dadurch gekennzeichnet,**
**dass** die fluchtend angeordneten Trag- und Führungsstrukturen (11) zueinander bzw. untereinander mit einer Lücke (9) montiert werden, die mit einer Verzahnung (12) versehen sind, und dass über eine Antriebswelle (1) mittels eines Antriebsritzels (2) Übertragungsritzel (3,4) angetrieben werden, die mit einer Verzahnung (5,6) der Verzahnung (12) zusammenwirken.

3. Antriebssystem nach einem der vorhergehenden Ansprüche,
**dadurch gekennzeichnet,**
**dass** mit dem Antriebsmotor (25) ein Getriebe verbunden ist, das bei einer beidseitigen Ausführung der Trag- und Führungsstruktur (11) auf jeder Seite der Kabine (18) einen Achsaustritt einer Antriebswelle (1) mit einem Antriebsritzel (2) aufweist.

4. Antriebssystem nach einem der vorhergehenden Ansprüche,
**dadurch gekennzeichnet,**
**dass** die Antriebswelle (1) mit dem Antriebsritzel (2) endseitig in einer Lagerplatte (28), zwischen den ebenfalls in der Lagerplatte (28) gelagerten Übertragungsritzeln (3,4) gelagert ist.

5. Antriebssystem nach einem der vorhergehenden Ansprüche,
**dadurch gekennzeichnet,**
**dass** die Übertragungsritzel (3,4) und das Antriebsritzel (2) breiter sind als die Verzahnung (12) der Trag- und Führungsstrukturen (11).

6. Antriebssystem nach einem der vorhergehenden Ansprüche,
**dadurch gekennzeichnet,**
**dass** die zueinander fluchtend montierten Trag- und Führungsstrukturen (11) über vorzugsweise aus einem Federstahl bestehende Befestigungen (10) an einer Strebe (26) oder dergleichen nachgiebig, vorzugsweise nachgebend, befestigt sind.

7. Antriebssystem nach einem der vorhergehenden Ansprüche,
**dadurch gekennzeichnet,**
**dass** die Befestigungen (10) vorzugsweise eine U-förmige Form mit einem Grundschenkel (31) und davon ausgehenden Federschenkeln (16,17) aufweisen.

8. Antriebssystem nach einem der vorhergehenden Ansprüche,
**dadurch gekennzeichnet,**
**dass** die Enden der Federschenkel (16,17) kraft- und formschlüssig mit der Strebe (26) und der Grundschenkel (31) mit der Trag- und Führungsstruktur (11) verbunden sind.

9. Antriebssystem nach einem der vorhergehenden Ansprüche,
**dadurch gekennzeichnet,**
**dass** Teilsegmente mit der Trag- und Führungsstruktur (11) vorzugsweise an ihren Enden über die Streben (26) verbunden sind.

10. Antriebssystem nach einem der vorhergehenden Ansprüche,
**dadurch gekennzeichnet,**
**dass** im oberen Bereich der Kabine (13) Führungselemente (21) und an dem Antriebsmodul (19) Führungsrollen vorhanden sind, die mit dem Führungsbereich der Trag- und Führungsstruktur (11) zusammen wirken.

## Claims

1. Drive system in the form of a drive module for vertical advance of a cabin (18) or similar driven by a drive motor (25), along at least one toothing (12) which is formed by several individual carrier and guide structures (11) arranged in alignment, wherein transmission pinions (3, 4) are driven via a drive shaft (1) by means of a drive pinion (2) and cooperate with the toothing (12) via a pinion toothing (5, 6),
**characterised in that**
the toothing (12) has a run-up chamfer (13) on the mutually facing end faces (15) of the carrier and guide structures (11) in the form that the toothing (12) runs out so that this transforms into end faces (15) of the carrier and guide structure (11) over a radius (14) or similar on at least one side of the cabin (18).

2. Drive system according to claim 1,
**characterised in that**
the aligned carrier and guide structures (11) are mounted with a gap (9) between them which is provided with a toothing (12), and that transmission pinions (3, 4) are driven via a drive shaft (1) by means of a drive pinion (2) and cooperate with the toothing (12) via a pinion toothing (5, 6).

3. Drive system according to any of the preceding claims,
**characterised in that**
a gear mechanism is connected to the drive motor (25) and has a shaft outlet of a drive shaft (1) with a drive pinion (2) on each side of the cabin (18) when the carrier and guide structure (11) is arranged on both sides.

4. Drive system according to any of the preceding claims,
**characterised in that**
the drive shaft (1) with the drive pinion (2) is mounted at the end in a bearing plate (28) between the transmission pinions (3, 4) also mounted in the bearing plate (28).

5. Drive system according to any of the preceding claims,
**characterised in that**
the transmission pinions (3, 4) and the drive pinion (2) are wider than the toothing (12) of the carrier and guide structures (11).

6. Drive system according to any of the preceding claims,
**characterised in that**
the mutually aligned carrier and guide structures (11) are attached via fixings (10), preferably made of a spring steel, to a web (26) or similar in a flexible, preferably yielding manner.

7. Drive system according to any of the preceding claims,
**characterised in that**
the fixings (10) preferably have a U-shape with a base leg (31) and spring legs (16, 17) departing from this.

8. Drive system according to any of the preceding claims,
**characterised in that**
the ends of the spring legs (16, 17) are connected by force and form fit to the web (26), and the base leg (31) is connected to the carrier and guide structure (11).

9. Drive system according to any of the preceding claims,
**characterised in that**
partial segments are connected to the carrier and guide structure (11), preferably at its ends, via the webs (26).

10. Drive system according to any of the preceding claims,
**characterised in that**
guide elements (21) are present in the upper region of the cabin (13), and guide rollers are present on the drive module (19) which cooperate with the guide region of the carrier and guide structure (11).

## Revendications

1. Système d'entraînement sous la forme d'un module d'entraînement pour déplacer verticalement une cabine (18) ou similaire entraînée par un moteur d'entraînement (25) le long d'au moins une denture (12) formé au moins de plusieurs structures individuelles de support et de guidage (11) agencées dans l'alignement, dans lequel des pignons de transmission (3, 4) sont entraînés via un arbre d'entraînement (1) au moyen d'un pignon d'entraînement (2), lesquels pignons de transmission mettent en prise une denture (5, 6) avec la denture (12),
**caractérisé en ce que**
la denture (12) présente respectivement sur les côtés avant (15) des structures de support et de guidage (11) dirigées l'une vers l'autre un chanfrein de départ (13) de conformation telle que la denture (12) se termine de sorte que celle-ci se convertisse à un rayon (14) ou similaire dans les côtés avant (15) de la structure de support et de guidage (11) sur au moins un côté de la cabine (18).

2. Système d'entraînement selon la revendication 1,
**caractérisé en ce que**
les structures de support et de guidage (11) agencées dans l'alignement sont montées l'une sur l'autre ou l'une au-dessous de l'autre avec un interstice (9) et sont pourvues d'une denture (12) et des pignons de transmission (3, 4) sont entraînés via un arbre d'entraînement (1) au moyen d'un pignon d'entraînement (2), lesquels pignons de transmission mettent en prise une denture (5, 6) avec la denture (12).

3. Système d'entraînement selon l'une quelconque des revendications précédentes,
**caractérisé en ce que**
le moteur d'entraînement (25) est relié à une transmission qui présente, dans le cas d'une version bilatérale de la structure de support et de guidage (11) sur chaque côté de la cabine (18), une sortie axiale d'un arbre d'entraînement (1) avec un pignon d'entraînement (2).

4. Système d'entraînement selon l'une quelconque des revendications précédentes,
**caractérisé en ce que**
l'arbre d'entraînement (1) est monté avec le pignon d'entraînement (2) côté extrémité dans une plaque de montage (28) entre les pignons de transmission (3, 4) également montés sur la plaque de montage (28).

5. Système d'entraînement selon l'une quelconque des revendications précédentes,
**caractérisé en ce que**
les pignons de transmission (3, 4) et le pignon d'entraînement (2) sont plus larges que la denture (12) des structures de support et de guidage (11).

6. Système d'entraînement selon l'une quelconque des revendications précédentes, **caractérisé en ce que**
les structures de support et de guidage (11) montées dans l'alignement l'une de l'autre sont fixées via de préférence des fixations (10) constituées d'un acier à ressort sur une entretoise (26) ou similaire de manière élastique, de préférence de manière extensible.

7. Système d'entraînement selon l'une quelconque des revendications précédentes,
**caractérisé en ce que**
les fixations (10) présentent de préférence une forme en U avec une branche de base (31) et des branches élastiques (16, 17) qui partent de celle-ci.

8. Système d'entraînement selon l'une quelconque des revendications précédentes,
**caractérisé en ce que**
les extrémités des branches élastiques (16, 17) sont reliées à la structure de support et de guidage (11) en mode mécanique et par adaptation de formes avec l'entretoise (26) et la branche de base (31).

9. Système d'entraînement selon l'une quelconque des revendications précédentes,
**caractérisé en ce que**
des segments partiels sont reliés avec la structure de support et de guidage (11) de préférence à leurs extrémités via les entretoises (26).

10. Système d'entraînement selon l'une quelconque des revendications précédentes,
**caractérisé en ce que**
il est prévu dans la zone de la cabine (13) des éléments de guidage (21) et sur le module d'entraînement (19) des rouleaux de guidage qui sont en prise avec la zone de guidage de la structure de support et de guidage (11).
